# EUROPÄISCHE PATENTANMELDUNG

(11) **EP 1 923 966 A2**
(43) Veröffentlichungstag der Anmeldung: **21.05.2008**
(21) Anmeldenummer: 07014358.1
(22) Anmeldetag: 21.07.2007
(51) Int. Cl.: H01R 13/74

(54) **Steckdose**

(30) Priorität: 14.11.2006 DE 102006053477
(71) Anmelder: ERICH JAEGER GmbH + Co. KG, 61169 Friedberg (DE)
(72) Erfinder: Padeffke, Nicole, 60385 Frankfurt am Main (DE); Mattern, Kirstin, 61250 Usingen (DE); Wiese, Wolfgang, 61389 Schmitten (DE)
(74) Vertreter: KEIL & SCHAAFHAUSEN Patentanwälte

(57) **Zusammenfassung**

Es wird eine Steckdose (1) zum Einstecken eines elektrischen Anhänger-Anschlusskabels mit einem in einem Spritzgussverfahren aus Kunststoff hergestellten Steckdosengehäuse (2) und einem Kontakteinsatz (3) beschrieben, welcher zumindest teilweise in das Steckdosengehäuse (2) aufgenommen und über eine Einstecköffnung (6) in dem Steckdosengehäuse (2) zum Einstecken des elektrischen Anhänger-Anschlusskabels zugänglich ist. Um den für den Einbau der Steckdose (1) benötigten Bauraum klein zu halten und die Montage zu vereinfachen, ist in dem Spritzgussverfahren an das Steckdosengehäuse (2) eine Lasche (8) zur Befestigung der Steckdose (1) angespritzt.

## Beschreibung

Die Erfindung betrifft eine Steckdose zum Einstecken eines elektrischen Anhänger-Anschlusskabels bzw. dessen Steckers mit einem in einem Spritzgussverfahren aus Kunststoff hergestellten Steckdosengehäuse und einem Kontakteinsatz, welcher zumindest teilweise in das Steckdosengehäuse aufgenommen und über eine Einstecköffnung in dem Steckdosengehäuse zum Einstecken eines elektrischen Anhänger-Anschlusskabels zugänglich ist.

Steckdosen dieser Art befinden sich in der Regel unmittelbar benachbart zu Anhängerkupplungen an einem Zugfahrzeug, bspw. einem Pkw, um nach dem Anhängen eines Anhängers an die Anhängerkupplung die elektrische Versorgung des Anhängers durch Einstecken des Steckers eines Anhänger-Anschlusskabels in die Steckdose zu erreichen. Die Form und Anordnung der Kontakte in der Steckdose und dem Stecker des Anhänger-Anschlusskabels unterliegen dabei in den jeweiligen Ländern häufig Normvorschriften. Um die Kompatibilität bei dem Anbringen verschiedener Steckdosen an ein Kraftfahrzeug zu wahren, sind häufig auch die Anbringpunkte der Steckdose an ein Kraftfahrzeug genormt. Dazu weisen die Steckdosen in ihrem entsprechend dick ausgestalteten Rand gleichmäßig über den Umfang verteilt drei Durchgangslöcher für Schrauben auf, mit denen die Steckdose an dem Kraftfahrzeug festgeschraubt werden kann. Durch die festgelegte Position der Schraubenlöcher kann auch eine normgerechte Ausrichtung der Steckdose erreicht werden.

Nachteilig hierbei ist jedoch, dass durch die drei in dem Gehäuserand bzw. der Gehäusewandung der Steckdose vorgesehenen Schraubenlöcher die Ausdehnung der Steckdose im Vergleich zu der Ausdehnung des eigentlichen Kontaktbereiches groß ist. Hierdurch wird für den Einbau der Steckdose an dem Zugfahrzeug ein vergleichsweise großer Bauraum benötigt, der bei vielen Kraftfahrzeugen nicht mehr zur Verfügung steht bzw. anders genutzt werden soll. Außerdem müssen in einem schlecht zugänglichen Fahrzeugbereich drei Schrauben eingesetzt und festgezogen werden. Dies erschwert die Montage.

Aufgabe der vorliegenden Erfindung ist es daher, eine Steckdose der eingangs genannten Art vorzuschlagen, die einfacher zu montieren ist und insbesondere bei einem Zugfahrzeug weniger Einbauraum benötigt.

Diese Aufgabe wird erfindungsgemäß im Wesentlichen dadurch gelöst, dass in dem Spritzgussverfahren an das Steckdosengehäuse eine insbesondere von dem Steckdosengehäuse bzw. dessen äußeren Umfangsoberfläche abstehende Lasche zur Befestigung der Steckdose angespritzt ist. Diese Lasche, mit der die Steckdose an geeigneten Befestigungselementen an dem Kraftfahrzeug angelegt und befestigt werden kann, besteht also auch aus Kunststoff und ist einteilig mit dem Steckdosengehäuse ausgebildet. In Versuchen hat sich herausgestellt, dass diese einteilig mit dem Gehäuse verspritzte Lasche eine ausreichende Stabilität aufweist, obwohl sie vergleichsweise klein ist und wesentlich weniger Bauraum einnimmt als das in herkömmlichen Steckdosen im Bereich der Einstecköffnung meist doppelwandig ausgebildete Steckdosengehäuse, in dem gleichmäßig über den Umfangsrand verteilt drei Durchgangslöcher entsprechend der Norm für die Befestigung der Steckdose vorgesehen sind. Hierdurch kann das Steckdosengehäuse insgesamt wesentlich kleiner ausgebildet werden, so dass in dem Kraftfahrzeug weniger Einbauraum benötigt wird und die Steckdose einfacher montiert werden kann, auch weil die erfindungsgemäße Lasche eine genau definierte Anlageposition vorgibt.

Vorzugsweise ist die Lasche an dem äußeren Umfang des Steckdosengehäuses in einem Bereich angeordnet, in welchem das Steckdosengehäuse die Einstecköffnung umgibt. Es hat sich herausgestellt, dass bei einer derartigen Anordnung der Lasche Vorteile bei der Stabilität der Befestigung der Steckdose an dem Kraftfahrzeug erreicht werden, da bei dem Einstecken des Steckers in die Einstecköffnung nur ein kleiner Hebelarm und damit kleinere Kräfte auf die Lasche und die Befestigungseinrichtung einwirken.

Erfindungsgemäß lässt sich eine besonders kompakte Form der Steckdose erreichen, wenn das Steckdosengehäuse in dem die Einstecköffnung umgebenden Bereich einwandig, insbesondere also nicht doppel- oder mehrwandig aufgebaut ist. Daher ist gemäß dieser bevorzugten Ausführungsform der Erfindung vorgesehen, dass zwischen einer die Einstecköffnung einschließenden Wand und einer äußeren Umfangswand des Steckdosengehäuses keine Kammer oder kein Hohlraum vorgesehen ist. Das einwandige Steckdosengehäuse lässt sich daher besonders dünnwandig ausbilden, wobei die Wandstärke vorzugsweise nicht mehr als 5 mm betragen soll. Eine ausreichende Stabilität lässt sich im Regelfall bereits mit einer Wandstärke von etwa 2 mm erreichen, welche daher eine besonders bevorzugte Ausführungsform ist.

Um eine besonders sichere Befestigung der Steckdose zu erreichen, kann erfindungsgemäß eine Anlagefläche der Lasche parallel bzw. nahezu parallel zu einer durch den Verlauf des Randes der Einstecköffnung definierten Ebene ausgebildet sein. Diese Ebene verläuft vorzugsweise auch senkrecht zu der Einsteckrichtung für die Kontakte bzw. senkrecht zu der Kontaktachse, in deren Richtung die Einsteckkraft wirkt. Daher ist eine derartig ausgebildete Anlagefläche besonders geeignet, um die Kräfte beim Einstecken eines Steckers in die erfindungsgemäße Steckdose aufzunehmen, auch wenn die Lasche und Anlagefläche klein ausgebildet sind.

Um die Kräfte an verschiedenen Positionen um die Steckdose herum verteilt aufzunehmen, ist es ferner möglich, die Lasche mehrteilig aufzubauen, wobei die einzelnen Laschenteile jeweils eine geeignete Anlagefläche aufweisen. Die mehreren Laschenteile zeichnen sich vorzugsweise dadurch aus, dass jedes Laschenteil eine eigenständige Anlagenfläche aufweist. Die verschiedenen Laschenteile können dabei jeweils separat an der Steckdose vorgesehen werden oder über Verbindungsabschnitte bzw. Stege miteinander verbunden sein.

Gemäß einer besonders bevorzugten Ausführungsform können die Lasche bzw. verschiedene Laschenteile zwei in ihrer normalen Richtung beabstandete Anlageflächen aufweisen. Dies bedeutet, dass an der Lasche verschiedene Anlageflächen ausgebildet sind, die in verschiedenen Höhen angeordnet sind. Die Anlageflächen können parallel oder nahezu parallel zueinander verlaufen. Die vorliegende Erfindung ist jedoch nicht auf die parallele Anordnung verschiedener Anlageflächen der Lasche beschränkt. Es ist grundsätzlich auch denkbar, verschiedene Anlageflächen einer Lasche in einem (von 0° verschiedenen) Winkel zueinander anzuordnen, bspw. um eine besondere Kippwirkung beim Einstecken des Steckers in die Steckdose optimal abzufangen oder (insbesondere bei einem nur kleinen Zwischenwinkel der Anlageflächen zueineinander) eine gute Klemmwirkung zwischen den beiden Anlageflächen zu erreichen.

Gemäß einer bevorzugten Ausführungsform der vorliegenden Erfindung können die Anlageflächen bzw. Laschenteile einer Lasche über einen insbesondere schräg oder senkrecht zu den Anlageflächen verlaufenden Steg miteinander verbunden sein. Dabei können verschieden große Anlageflächen vorgesehen sein, die insbesondere um den Umfangsrand des Steckdosengehäuses mit oder ohne Überschneidungen an verschiedenen Positionen angeordnet sind. Die Lasche kann sich auch um den gesamten Umfangsrand des Steckdosengehäuses erstrecken, wobei einzelne Laschenteile bspw. abschnittsweise ausgebildet sein können.

Hierfür ist vorzugsweise vorgesehen, dass die mehreren Teile der Lasche um den gesamten Umfangsrand des insbesondere rund ausgebildeten Steckdosengehäuses umlaufend ausgebildet sind. Auf diese Weise werden um den gesamten Umfang verteilt Anlageflächen zur Verfügung gestellt, die die beim Einstecken eines Steckers auf das Steckdosengehäuse und dessen Befestigung einwirkenden Kräfte besonders gut abfangen.

Gemäß einer besonders bevorzugten Ausführungsform schlägt die Erfindung vor, dass eine erste Gruppe von Laschenteilen ihre Anlagefläche in einer ersten Ebene und eine zweite Gruppe von Laschenteilen ihre Anlagefläche in einer Ebene haben, wobei die Anlageflächen vorzugsweise einander zugewandt ausgebildet sind, um ein Haltelement von zwei Seiten zu umschließen. Die erste und die zweite Ebene sind vorzugsweise so ausgebildet, dass zwischen ihnen ein Spalt verbleibt, in dem ein Halteblech oder dgl. Halteelement einschiebbar ist, um die Steckdose an dem Zugfahrzeug festzulegen. Dabei kann eine oder jede Gruppe von Laschenteilen auch nur aus einer Lasche mit einer Anlagefläche gebildet sein.

Zur Sicherung kann an der Lasche ein Befestigungsmittel vorgesehen sein. Im einfachsten Fall können dies ein Durchgangsloch für eine Verschraubung der Lasche mit einem Halteelement an dem Kraftfahrzeug und/oder einer Durchstecköffnung sein, welche vorzugsweise auch zusammenwirken. Ferner kann an der Lasche ein federnd ausgebildeter, beweglicher Rasthaken vorgesehen sein, der die Steckdose in ihrer Befestigungsposition an einem hierfür ausgebildeten Halteelement verrastet. Die Erfindung ist nicht auf die konkret beschriebenen Befestigungsmittel beschränkt, die jedoch eine besonders einfache und sichere Befestigung und Montage der Steckdose ermöglichen.

Erfindungsgemäß erfasst die Steckdose auch ein Halteelement, welches insbesondere als Halteblech ausgebildet sein kann. Das Halteelement ist zur Montage der Steckdose bspw. an einem Zugfahrzeug vorgesehen und wirkt mit der an dem Steckdosengehäuse angespritzten Lasche zusammen. Bspw. kann ein geeignetes Halteblech eine Durchstecköffnung zum Einstecken einer Lasche haben, so dass zwei Anlageflächen der Lasche von jeder Seite an dem Halteblech anliegen. Ferner kann in dem Halteblech ein mit einem Innengewinde versehene Schraubenöffnung vorgesehen sein, um die Lasche mit einer Schraube festzulegen und zu sichern. Gemäß einer anderen Ausführungsform, welche insbesondere auch für die Aufnahme eines runden Dosengehäuses geeignet ist, kann das Halteblech als profilierte Kreisscheibe ausgebildet sein, in der verschiedene Ausnehmungen vorgesehen sind, so dass das Dosengehäuse in das Halteblech derart eingesteckt und verschoben werden kann, dass die Anlagenflächen verschiedener Laschenteile von beiden Seiten an dem Halteblech anliegen und Rastnasen in geeigneten Rastöffnungen des Halteblechs verrasten.

Erfindungsgemäß kann der Aufbau der Steckdose noch kompakter erfolgen, wenn der Kontakteinsatz und darin aufgenommene und mit Anschlusskabeln versehene Kontakte als ein einteiliges Spritzgussteil aufgebaut sind und bspw. einen der Einstecköffnung gegenüberliegenden Bereich des Steckdosengehäuses als Verschluss abdecken. Hierdurch werden zusätzliche, platz beanspruchende Gehäuseteile vermieden und der Kontakteinsatz zuverlässig abgedichtet.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbeziehung.

Es zeigen:
- Fig. 1: eine dreidimensionale Ansicht einer erfindungsgemäßen Steckdose gemäß einer ersten Ausführungsform;
- Fig. 2: eine Aufsicht auf die erfindungsgemäße Steckdose gemäß Fig. 1;
- Fig. 3: eine Seitenansicht der erfindungsgemäßen Steckdose gemäß Fig. 1;
- Fig. 4: einen Querschnitt durch die erfindungsgemäße Steckdose gemäß Fig. 1;
- Fig. 5: ein zu der Steckdose gemäß Fig. 1 erfindungsgemäß gehörendes Halteblech in einer Vorder- und einer Rückansicht;,
- Fig. 6: die Steckdose gemäß Fig. 1 mit Halteblech in dreidimensionalen Darstellung;
- Fig. 7: die Steckdose gemäß Fig. 1 mit Halteblech in einer Seitendarstellung;
- Fig. 8: die Steckdose gemäß Fig. 1 mit Halteblech in einer Ansicht von unten;
- Fig. 9: einen Querschnitt durch eine erfindungsgemäße Steckdose gemäß einer zweiten Ausführungsform;
- Fig. 10: eine dreidimensionale Ansicht einer erfindungsgemäßen Steckdose gemäß einer dritten Ausführungsform;
- Fig. 11: eine Seitenansicht der Steckdose gemäß Fig. 10;
- Fig. 12: einen Querschnitt durch eine Steckdose gemäß Fig. 10;
- Fig. 13: ein Halteblech für die Steckdose gemäß Fig. 10 in einer dreidimensionalen Ansicht;
- Fig. 14: die Steckdose gemäß Fig. 10 mit Halteblech in einer Seitenansicht;
- Fig. 15.: die Steckdose gemäß Fig. 10 mit Halteblech in einer Ansicht von unten und
- Fig. 16: die Steckdose gemäß Fig. 10 mit Halteblech in der dreidimensionalen Ansicht.

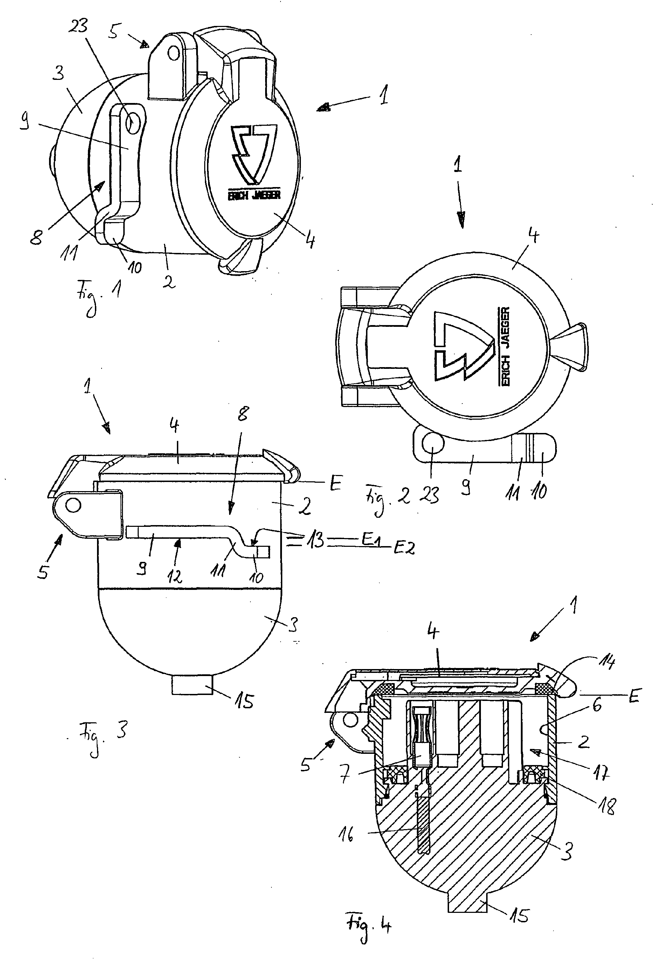

In Fig. 1 ist eine erfindungsgemäße Steckdose 1 in einer dreidimensionalen Ansicht dargestellt. Die Steckdose 1 hat ein in einem Spritzgussverfahren aus Kunststoff hergestelltes Steckdosengehäuse 2, in welches ein Kontakteinsatz 3 teilweise aufgenommen ist. Die Anschlussseite des Kontakteinsatzes 3 ist in der Darstellung gemäß Fig. 1 durch einen Gehäusedeckel 4 abgedeckt, der seitlich mittels eines Scharniers 5 an dem Steckdosengehäuse 2 befestigt ist. Das der Anschlussseite des Kontakteinsatzes 3 gegenüber liegende Ende des Kontakteinsatzes 3 stößt an das dem Gehäusedeckel 4 gegenüberliegende Ende des Steckdosengehäuses 2 an und schließt dieses abdichtend ab.

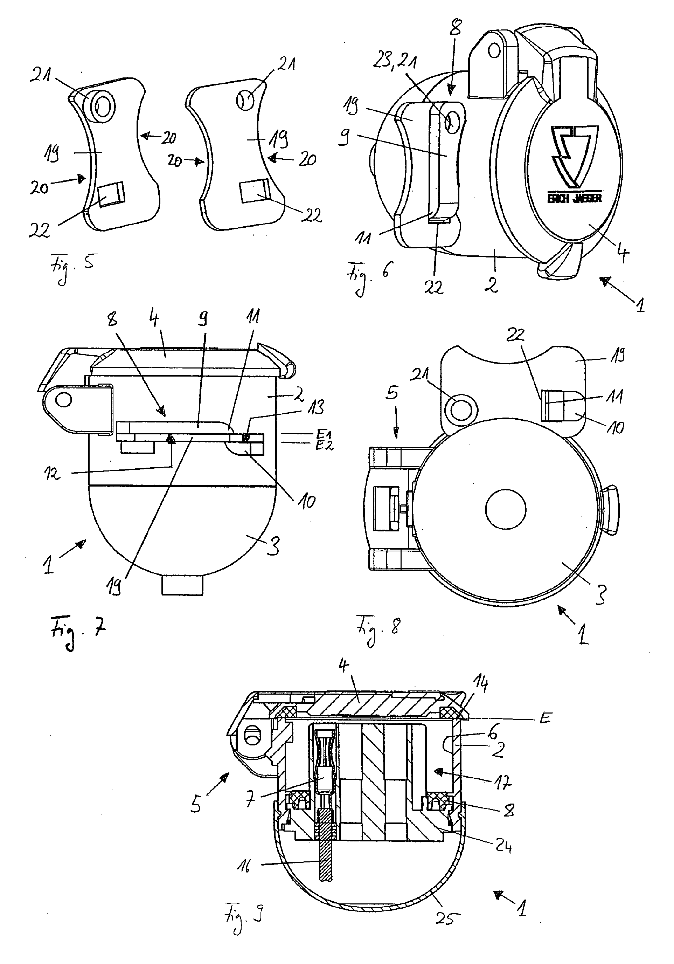

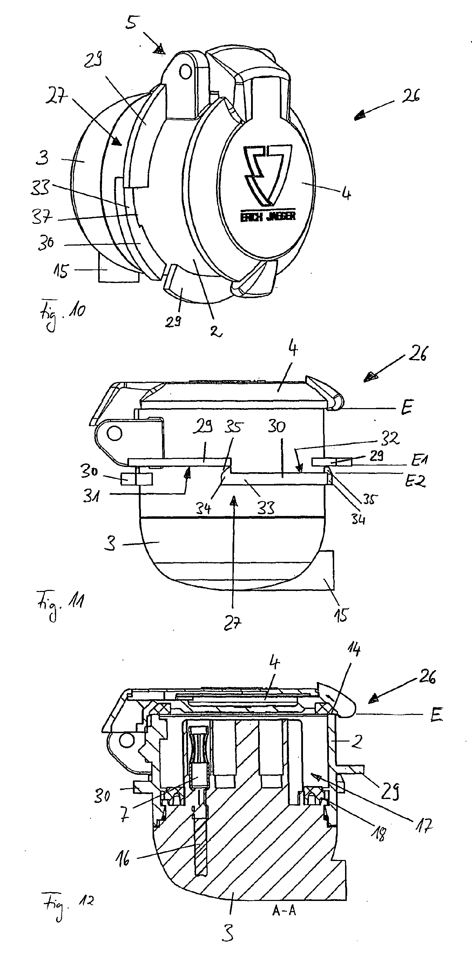

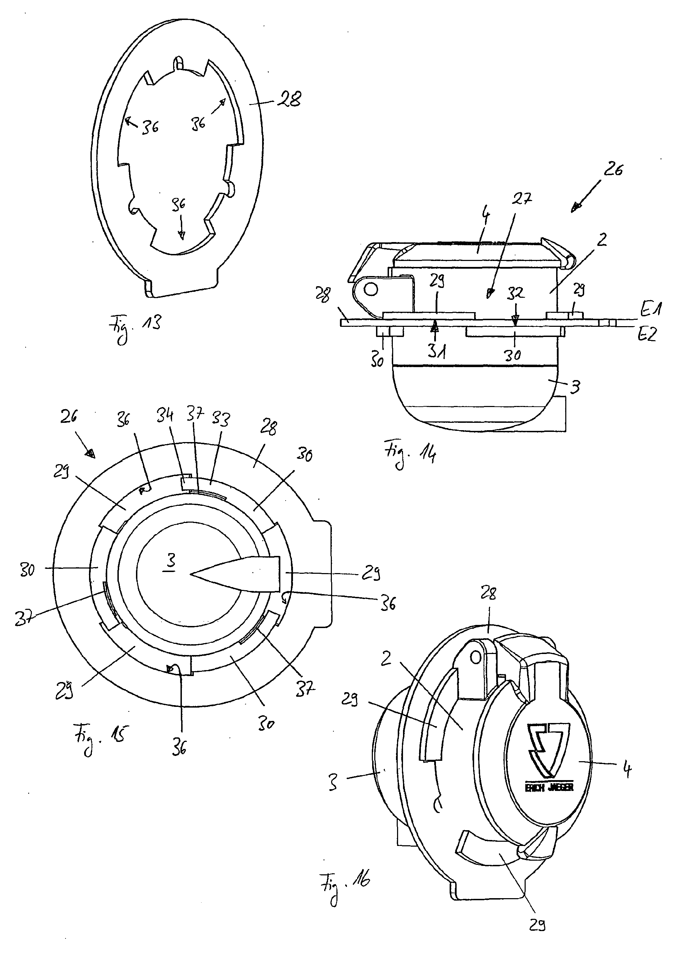

Unter dem Gehäusedeckel 4 weist das Steckdosengehäuse 2 eine in Fig. 4 dargestellte Einstecköffnung 6 auf, in die der Kontaktabschnitt 17 des Kontakteinsatzes 3 mit den Kontakten 7 hereinreicht. Nach Aufklappen des Gehäusedeckels 4 kann ein Anhänger-Anschlusskabel mit seinem Stecker in die Einstecköffnung 6 des Steckdosengehäuses 2 eingesteckt werden.

In dem Spritzgussverfahren zur Herstellung des Steckdosengehäuses 2 ist an das Steckdosengehäuse 2 einteilig eine Lasche 8 zur Befestigung der Steckdose 1 angespritzt. Die Lasche 8 steht seitlich von dem äußeren Umfang des Steckdosengehäuses 2 vor, wie auch Fig. 2 zu entnehmen ist, die eine Aufsicht auf den Gehäusedeckel 4 der Steckdose 1 zeigt. Die Lasche 8 weist dabei einen ersten Laschenteil 9 auf, der unmittelbar mit der Außenwand des Steckdosengehäuses 2 verbunden ist. Ein zweiter Laschenteil 10 ist an den ersten Laschenteil 9 anschließend angeordnet und mit diesem über einen schräg verlaufenden Steg 11 verbunden, so dass die Laschenteile 9, 10 in der in Fig. 3 dargestellten Seitenansicht in der Höhe parallel zueinander versetzt sind. Der zweite Laschenteil 10 verläuft in Verlängerung des ersten Laschenteils 9, d. h. in tangentialer Richtung zu der runden Oberfläche des Steckdosengehäuses 2, und ist mit dem Steckdosengehäuse 2 nicht verbunden.

Wie der Seitenansicht gemäß Fig. 3 zu entnehmen, ist die Lasche 8 an dem äußeren Umfang des Steckdosengehäuses 2 in einem Bereich angeordnet, in welchem das Steckdosengehäuse 2 die Einstecköffnung 6 umgibt. Hierdurch werden die beim Einstecken des Steckers in die Einstecköffnung 6 und die Kontakte 7 auftretenden Kräfte in räumlicher Nähe zu dem Ort abgefangen, in dem sie entstehen. Hierdurch werden starke Hebelkräfte vermieden, so dass die Befestigung der Steckdose 1 durch die Lasche 8 zuverlässig erfolgen kann.

Die Lasche 8 weist an ihrem ersten Laschenteil 9 eine in der Darstellung von Fig. 3 nach unten gerichtete erste Anlagefläche 12 und an ihrem zweiten Laschenteil 10 eine nach oben gerichtete zweite Anlagefläche 13 auf. Der erste Laschenteil 9 und der zweite Laschenteil 10 sind durch einen schräg verlaufenden Steg 11 miteinander verbunden.

Die erste Anlagefläche 12 und die zweite Anlagefläche 13 wirken in noch genauer zu beschreibender Weise mit einem Halteelement 19 zusammen. Dazu sind die erste Anlagefläche 12 und die zweite Anlagefläche 13 parallel zueinander in einer ersten Ebene E1 bzw. einer zweiten Ebene E2 angeordnet, welche also beabstandet zueinander in paralleler Ausrichtung verlaufen. Die Ebenen E1 und E2 sind ferner parallel zu einer Ebene E ausgerichtet, welche durch den Verlauf des Randes 14 der Einstecköffnung 6 an dem Steckdosengehäuse 2 (vgl. Fig. 4) definiert ist.

Auf der dem Gehäusedeckel 4 gegenüberliegenden Seite des Steckdosengehäuses 2 schließt sich der Kontakteinsatz 3 mit dem Kabelauslass 15 an, dessen Aufbau aus der Schnittzeichnung (Fig. 4) besonders gut ersichtlich ist. Danach sind in den Kontakteinsatz 3 mehrere Kontakte 7 aufgenommen, von denen in Fig. 4 nur einer dargestellt ist. Mit dem Kontakt 7 ist ein Anschlusskabel 16 fest verbunden. Sowohl die Kontakte 7 als auch die Anschlusskabel 16 sind bei der Herstellung des Kontakteinsatzes 3 in einem Spritzgussverfahren fest in den Kontakteinsatz 3 eingegossen worden, der daher einteilig ausgebildet ist und einen in die Einstecköffnung 6 des Steckdosengehäuses 2 hineinreichenden Kontaktabschnitt 17 aufweist.

Angrenzend an den Kontaktabschnitt 17 ist der Kontakteinsatz 3 unter Abdichtung mittels einer Dichtung 18 mit dem Steckdosengehäuse 2 durch Verrasten verbunden, so dass der Kontakteinsatz 3 eine dem Gehäusedeckel 4 gegenüberliegende Öffnung in dem Steckdosengehäuse verschließt, wobei die Art der Befestigung des Kontakteinsatzes 3 an dem Steckdosengehäuse 2 auch anderes ausgebildet sein kann.

Der Schnittdarstellung der Steckdose 1 gemäß Fig. 4 ist ferner zu entnehmen, dass das Steckdosengehäuse 2 im Bereich der Einstecköffnung 6 einwandig ausgebildet ist, so dass die Innenseite der Wandung des Steckdosengehäuses 2 die Einstecköffnung 6 begrenzt und die Außenseite der Wandung des Steckdosengehäuses 2 den äußeren Umfang der Steckdose 1 bildet. An dieser äußeren Umfangsseite des Steckdosengehäuses 2 ist die Lasche 8 durch Anspritzen einteilig festgelegt. Auf diese Weise kann die Steckdose 1 mit Hilfe der Lasche 8 zuverlässig an einem Kraftfahrzeug festgelegt werden, ohne dass die Wand des Steckdosengehäuses 2 zur Aufnahme von Befestigungslöchern dick oder mehr-, bspw. doppelwandig ausgebildet ist. Dies führt dazu, dass die Steckdose 1 im Vergleich zu den bekannten Steckdosen zum Anschluss von elektrischen Anschlusskabeln für Anhänger sehr kompakt aufgebaut ist.

Auch das in Fig. 5 in einer dreidimensionalen Ansicht von vorne und hinten dargestellte Halteblech 19 ist vergleichsweise klein und benötigt nicht viel Einbauraum, um an einem Kraftfahrzeug zum Halten der Steckdose 1 festgelegt zu werden. Das Halteblech 19 weist eine rechteckige Grundform auf, wobei die Längsseiten des Rechtecks abgerundete Ausnehmungen 20 aufweisen, von denen zumindest eine der Außenkontur der Steckdose 1 bzw. des Steckdosengehäuses 2 im Bereich der Lasche 8 nachempfunden ist. Relativ zu einer Ausnehmung 20 positioniert finden sich in dem Halteblech 19 eine Schrauböffnung 21 mit einem Innengewinde, welche auf einer Seite des Halteblechs 19 verstärkt ausgebildet ist. Ferner ist, ebenfalls relativ zu der Ausnehmung 20 und der Schrauböffnung 21 ausgerichtet, eine Durchstecköffnung 22 für die Lasche 8 der Steckdose 1 vorgesehen.

Die Ausrichtung und Funktion des Halteblechs 19 beim Festlegen der Steckdose 1 ist aus den Fig. 6 bis 8 ersichtlich. In der dreidimensionalen Ansicht gemäß Fig. 6 ist zu erkennen, dass die Lasche 8 derart an dem Halteblech 19 angeordnet ist, dass ein in dem ersten Laschenteil 9 ausgebildetes Durchgangsloch 23 über der Schrauböffnung 21 des Halteblechs 19 angeordnet ist, wenn die entsprechende Ausnehmung 20 an dem Steckdosengehäuse 2 anliegt. Dann kann mittels einer nicht dargestellten Schraube die Lasche 8 mit dem Halteblech 19 verschraubt werden.

Zuvor wurden der zweite Laschenteil 10 und der Steg 11 durch die Durchstecköffnung 22 des als Halteelement dienenden Halteblechs 19 hindurch gesteckt, so dass der zwischen dem ersten Laschenteil 9 und dem zweiten Laschenteil 10 schräg verlaufende Steg 11 in der Durchstecköffnung 22 angeordnet ist. Dies hat, wie Fig. 7 zu entnehmen, zur Folge, dass die in der ersten Ebene E1 verlaufende erste Anlagefläche 12 des ersten Laschenteils 9 auf der einen Seite des Halteblechs 19 bzw. deren Oberfläche aufliegt. Die zweite, in der Ebene E2 ausgebildete Anlagefläche 13 des zweiten Laschenteils 10 liegt dagegen auf der Oberfläche der anderen Seite des Halteblechs 19 an. Die Dicke des Halteblechs 19 entspricht dem Abstand der parallel verlaufenden Ebenen E1 und E2.

Durch diese Art der Fixierung ist die Steckdose 1 an dem Halteblech 19 sowohl beim Einstecken, wenn die erste Anlagefläche 12 gegen das Halteblech 19 gedrückt wird, als auch beim Herausziehen, wenn die zweite Haltefläche 13 gegen das Halteblech 19 gedrückt wird, gegen ein Verrutschen und Verkippen geschützt. Bei dem Herausziehen ist die Steckdose 1 zusätzlich durch die Verschraubung in dem Durchgangsloch 23 und der Schrauböffnung 21 gesichert. Dazu befindet sich das Durchgangsloch 23 auf dem ersten Laschenteil 9 vorzugsweise an einem dem Steg 11 entgegengesetzten Ende des ersten Laschenteils 9.

In der in Fig. 8 gezeigten Darstellung der Steckdose 1 mit Halteblech 19 in der Ansicht von unten sind das Durchführen des Steges 11 der Lasche 8 durch die Durchstecköffnung 22 und das Verhaken des zweiten Laschenteils 10 an dem Halteblech 19 deutlich zu erkennen.

Fig. 9 stellt eine abgewandelte Ausführungsform der Steckdose 1 dar, die sich jedoch nur in der Ausbildung des Kontakteinsatzes 24 unterscheidet. Die übrigen Elemente sich daher mit denselben Bezugszeichen versehen und werden nachfolgend nicht mehr erläutert.

Anstelle des zusammen mit den Kontakten 7 und den Anschlusskabeln 16 vergossenen Kontakteinsatzes 3 der ersten beschriebenen Ausführungsform weist die in Fig. 9 dargestellte Variante der Steckdose 1 eine herkömmliche Kontakteinheit 24 auf, welche - wie auch der Kontakteinsatz 3 - mittels einer Rastverbindung an dem Steckdosengehäuse 2 festgelegt wird. Allerdings sind die Kontakte 7 und die Anschlusskabel 16 nicht mit der Kontakteinheit 24 vergossen, sondern lediglich in diese eingesteckt. Dementsprechend vermag die Kontakteinheit 24 die dem Gehäusedeckel 4 gegenüberliegende Öffnung des Steckdosengehäuses 2 nicht zu verschließen, so dass diese mittels einer separaten, ebenfalls aufgesteckten Gehäusekappe 25 abdichtend verschlossen wird. In der Gehäusekappe ist ein in Fig. 9 nicht dargestellter Kabelauslass vorgesehen.

Nachfolgend wird eine weitere Ausführungsform einer Steckdose 26 erläutert, deren Aufbau der ersten Ausführungsform der Steckdose 1 gemäß Fig. 1 in wesentlichen Teilen entspricht, so dass auf eine ausführliche Beschreibung verzichtet werden kann, da die Ausführungen zu den vorausgegangenen Ausführungsformen entsprechend gelten.

Als Variante für den Kabelauslass 15 ist in Fig. 10 ein seitlich geführter Auslass dargestellt, der in gleicher Ausführung auch bei der gemäß Fig. 1 beschriebenen Ausführungsform der Erfindung Anwendung finden kann.

Der wesentliche Unterschied der Steckdose 26 liegt in der Ausbildung der Lasche 27 zur Befestigung der Steckdose 26 an einem in Fig. 13 dargestellten Halteblech 28, welches später noch genauer beschrieben wird. Die Lasche 27 besteht aus zwei Gruppen von jeweils mehreren Laschenteilen 29, 30, welche jeweils abwechselnd versetzt zueinander um den Umfangsrand des Steckdosengehäuses 2 herum angeordnet sind, so dass sie gemeinsam den gesamten Umfang des Steckdosengehäuses einfassen. Gleichmäßig um den Umfang verteilt sind also drei erste Laschenteile 29 und drei zweite Laschenteile 30 vorgesehen, die jeweils einteilig mit dem Steckdosengehäuse 2 an dessen Umfangsrand in einem Bereich angespritzt sind, in welchem das Steckdosengehäuse 2 die Einstecköffnung 6 umgibt. Insofern entspricht die Anordnung der Lasche 27 der der Lasche 8.

Wie Fig. 11 zu entnehmen, weisen die ersten Laschenteile 29 jeweils eine erste Anlagefläche 31 und die zweiten Laschenteile 30 eine zweite Anlagefläche 32 zu, die in Ebenen E1 und E2 einander zugewandt, aber beabstandet voneinander angeordnet sind. Diese Ebenen E1 und E2 verlaufen in dieser Ausführungsform nahezu parallel zueinander und ferner zu einer durch den Verlauf des Randes 14 der Einstecköffnung 6 definierten Ebene E. Indem die Ebenen E1 und E2 einen kleinen, von Null verschiedenen Winkel zueinander einschließen, wird durch die Anlageflächen 31 und 32 ggf. auch eine Klemmwirkung auf ein Halteblech 28 ausgeübt (vgl. Fig. 13).

An dem bzw. jedem zweiten Laschenteil 30 der Lasche 27 ist an einem flexiblen Arm 33 ein Rasthaken 34 vorgesehen, welcher in den Zwischenraum zwischen den Ebenen E1 und E2 hineinragt und diesen ggf. schließt. An seinem oberen Ende weist der Rasthaken 34 eine abgeschrägte Fläche 35 auf. Wie in Fig. 10 zu erkennen, ist der zweite Laschenteil 30 im Bereich des flexiblen Arms 33 nicht mit dem Dosengehäuse verbunden, so dass zwischen dem flexiblen Arm 33 und dem Steckdosengehäuse 2 ein Spalt 37 verbleibt und der flexible Arm 33 relativ zu dem Steckdosengehäuse 2 bewegt werden kann.

Entsprechend der Schnittzeichnung gemäß Fig. 12 ist der Kontakteinsatz 3 wie bei der ersten Ausführungsform als einteiliges Spritzgussteil ausgebildet, in welchem Kontakte 7 und Anschlusskabel 6 zu einer Einheit verspritzt sind. Dieser als Kontakteinheit ausgebildete Kontakteinsatz 3 ist mit dem Steckergehäuse 2 abdichtend verrastet.

Fig. 12 ist ferner zu entnehmen, dass die ersten Laschenteile 29 und die zweiten Laschenteile 30 einstückig mit dem Steckdosengehäuse 2 verspritzt sind und als in radialer Richtung von dem Steckdosengehäuse 2 vorspringende Vorsprünge ausgebildet sind. Dabei steht der erste Laschenteil 29 radial weiter nach außen von dem Steckdosengehäuse 2 vor als der zweite Laschenteil 30. Dies ermöglicht es, die Steckdose 26 in ein als Halteelement dienendes, ringförmig ausgebildetes Halteblech 28 einzusetzen, welches in Fig. 13 gezeigt ist. An seinem inneren Ringumfang weist das Halteblech 28 dem zweiten Laschenteil 30 entsprechende Ausnehmungen 36 auf, so dass die Steckdose 26 in einer geeigneten Drehstellung in das Halteblech 38 eingesteckt werden kann, bis die erste Anlagefläche 31 des ersten Laschenteils 29 auf der einen Seite des Halteblechs anliegt. Anschließend kann die Steckdose 26 in dem Halteblech 28 verdreht werden, wobei die abgeschrägte Fläche 35 der Rasthaken 34 an den Rand der Ausnehmungen 36 des Halteblechs anstößt und den Rasthaken 34 nach unten drückt. Wenn die Steckdose 26 so weit verdreht wurde, dass der Rasthaken 34 in die nächste Ausnehmung 36 des Halteblechs 28 einrastet, ist die Steckdose fest in dem Halteblech 38 festgelegt und gegen Verdrehungen gesichert. Diese liegt dann, wie in Fig. 14 dargestellt, in dem Halteblech 38, wobei die erste Anlagefläche 31 des ersten Laschenteils 29 und die zweite Anlagefläche 31 des zweiten Laschenteils 30 jeweils auf einer der beiden Oberflächen des Halteblechs 28 anliegen, welches in der Dicke dem Abstand der beiden Ebenen E1 und E2 entspricht.

Das Einrasten der an den flexiblen Armen 33 geführten Rasthaken 34 in die Ausnehmung 36 des Halteblechs 28 ist in der Darstellung der Steckdose von unten in Fig. 15 deutlich zu erkennen.

Fig. 16. zeigt eine dreidimensionale Ansicht der in dem Halteblech 28 fixierten Steckdose 26.

Auch die Steckdose 26 benötigt aufgrund des im Bereich der Einstecköffnung 6 einwandig ausgebildeten Steckdosengehäuses 2 und die flanschartig um dieses Steckdosengehäuse 2 angeordneten ersten und zweiten Laschenteile 29, 30 der Lasche 27 nur einen geringen Einbauraum, wobei die beim Einstecken eines Steckers eines elektrischen Anhänger-Anschlusskabels auftretenden Kräfte durch die Lasche 27 und das Halteblech 28 sicher aufgefangen werden.

### Bezugszeichenliste:

- 1: Steckdose
- 2: Steckdosengehäuse
- 3: Kontakteinsatz
- 4: Gehäusedeckel
- 5: Scharnier
- 6: Einstecköffnung
- 7: Kontakt
- 8: Lasche
- 9: erster Laschenteil
- 10: zweiter Laschenteil
- 11: Steg
- 12: erste Anlagefläche
- 13: zweite Anlagefläche
- 14: Rand
- 15: Kabelauslass
- 16: Anschlusskabel
- 17: Kontaktabschnitt
- 18: Dichtung
- 19: Halteblech
- 20: Ausnehmung
- 21: Schrauböffnung
- 22: Durchstecköffnung
- 23: Durchgangsloch
- 24: Kontakteinsatz
- 25: Gehäusekappe
- 26: Steckdose
- 27: Lasche
- 28: Halteblech
- 29: erster Laschenteil
- 30: zweiter Laschenteil
- 31: erste Anlagefläche
- 32: zweite Anlagefläche
- 33: flexibeler Arm
- 34: Rasthaken
- 35: abgeschrägte Fläche
- 36: Ausnehmungen
- 37: Spalt

- E, E1, E2: Ebene

## Patentansprüche

1. Steckdose zum Einstecken eines elektrischen Anhänger-Anschlusskabels mit einem in einem Spritzgussverfahren aus Kunststoff hergestellten Steckdosengehäuse (2) und einem Kontakteinsatz (3, 24), welcher zumindest teilweise in das Steckdosengehäuse (2) aufgenommen und über eine Einstecköffnung (6) in dem Steckdosengehäuse (2) zum Einstecken eines elektrischen Anhänger-Anschlusskabels zugänglich ist, **dadurch gekennzeichnet, dass** in dem Spritzgussverfahren an das Steckdosengehäuse (2) eine Lasche (8, 27) zur Befestigung der Steckdose angespritzt ist.

2. Steckdose nach Anspruch 1, **dadurch gekennzeichnet, dass** die Lasche (8, 27) an dem äußeren Umfang des Steckdosengehäuses (2) in einem Bereich angeordnet ist, in welchem das Steckdosengehäuse (2) die Einstecköffnung (6) umgibt.

3. Steckdose nach einem der Ansprüche 1 oder 2, **dadurch gekennzeichnet, dass** das Steckdosengehäuse (2) in dem die Einstecköffnung (6) umgebenden Bereich einwandig aufgebaut ist.

4. Steckdose nach einem der vorhergehenden Ansprüche, **dadurch gekennzeichnet, dass** eine Anlagefläche (12, 13, 31, 32) der Lasche (8, 27) parallel zu einer durch den Verlauf des Randes (14) der Einstecköffnung (6) definierten Ebene (E) ausgebildet ist.

5. Steckdose nach einem der vorhergehenden Ansprüche, **dadurch gekennzeichnet, dass** die Lasche (8, 27) mehrteilig (9, 10, 29, 30) aufgebaut ist.

6. Steckdose nach einem der vorhergehenden Ansprüche, **dadurch gekennzeichnet, dass** die Lasche (8, 27) zwei in ihrer Normalenrichtung beabstandete Anlageflächen (12, 13; 31, 32) aufweist.

7. Steckdose nach Anspruch 5 oder 6, **dadurch gekennzeichnet, dass** die Laschenteile (9, 10) oder Anlageflächen (12, 13) über einen Steg (11) miteinander verbunden sind.

8. Steckdose nach Anspruch 5 oder 6, **dadurch gekennzeichnet, dass** die mehreren Lascheteile (29, 30) um den gesamten Umfang des Steckdosengehäuses (2) umlaufend ausgebildet sind.

9. Steckdose nach einem der Ansprüche 5 bis 8, **dadurch gekennzeichnet, dass** eine erste Gruppe von Laschenteilen (9, 29) ihre Anlageflächen (12, 31) in einer ersten Ebene (E1) und eine zweite Gruppe von Laschenteilen (10, 30) ihre Anlageflächen (13, 32) in einer zweiten Ebene (E2) haben.

10. Steckdose nach einem der vorhergehenden Ansprüche, **dadurch gekennzeichnet, dass** an der Lasche (8, 27) ein Befestigungsmittel (21, 22, 33, 34) vorgesehen ist.

11. Steckdose nach einem der vorhergehenden Ansprüche, **dadurch gekennzeichnet, dass** ein Halteelement (19, 28) zur Montage der Steckdose (1, 26) vorgesehen ist, welches mit der an dem Steckdosengehäuse (2) angespritzen Lasche (8, 27) zusammenwirkt.

12. Steckdose nach einem der vorhergehenden Ansprüche, **dadurch gekennzeichnet, dass** mit Anschlusskabeln (16) versehene Kontakte (7) in dem Kontakteinsatz (3).
